# EUROPEAN PATENT APPLICATION

(11) **EP 0 988 926 A2**
(43) Date of publication of application: **29.03.2000**
(21) Application number: 99105389.3
(22) Date of filing: 16.03.1999
(51) Int. Cl.: B23Q 11/10

(54) **A machining method**

(30) Priority: 08.09.1998 JP 25439998
(71) Applicant: ECOREG LTD., Osaka-shi, Osaka 531-0072 (JP)
(72) Inventor: Hara, Mitsugu, Kishiwada-shi, Osaka 596-0827 (JP)
(74) Representative: Frankland, Nigel Howard

(57) **Abstract**

A work machining method comprising ejecting mist cooling water on a face side of an outside diameter tool from an ejection nozzle of a cooling water supply tube and ejecting mist oil cutting fluid on a flank side of the outside diameter tool from an ejection nozzle of an oil cutting fluid supply tube, wherein the ejection nozzle of the cooling water supply tube and the said ejection nozzle of the oil cutting fluid tube are mounted on a turret, whereby durability of the machining tool and finishing accuracy of the machined surface can be improved and no environmental problem is caused.

## Description

The present invention relates to a machining method such as cutting or grinding of a workpiece.

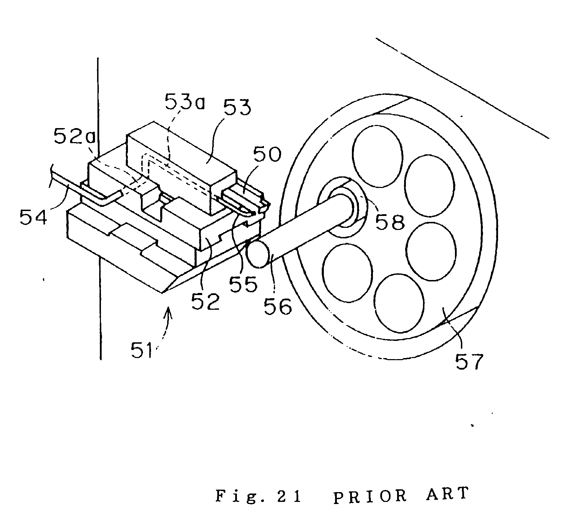

It is a conventional practice to supply coolant to a position where a machine tool contacts with a workpiece during cutting or grinding. A coolant feeder is disclosed in (Japanese Provisional Publication) TOKKAIHEI No. 8-197311. The coolant feeder is used for a multispindle automatic lathe. In the coolant feeder, (see Figure 21) coolant passages 52a, 53a, which are connected, are made in an x-axis slide 52 and a tool rest 53, respectively, of a cross slide 51 for holding a cutting tool 50. In addition, one end open of the coolant passage 52a of the x-axis slide 52 is connected via a distribution passage 54 (which is made of a tube or the like so as to be able to follow the tool rest 53) with a coolant supply (not shown) while one end open of the coolant passage 53a of the tool rest 53 is provided with a coolant supply pipe 55. In machining a workpiece 56, a coolant is fed through the distribution passage 54 and the coolant passages 52a, 53a, into the coolant supply pipe 55, and is ejected to a contact point between the cutting tool 50 and the workpiece 56 from the open end at the tip of the coolant supply pipe 55. Further, this apparatus is designed in such a manner that a coolant is supplied to a tool on the tool slide (not shown). In the figure, 57 is a spindle carrier and 58 is a main axis.

However, in the above coolant feeder, only one kind of coolant is supplied to the contact point between the cutting tool 50 and the workpiece 56 from one direction, resulting in insufficient cooling effect and insufficient lubricity. For this reason, there are problems of insufficient durability of the cutting tool 50 and poor finishing accuracy of the machined surface on the workpiece 56. Further, there is another problem from an environmental viewpoint since if liquids like cooling water or oil cutting fluid are used as a coolant, there is a need to be able to dispose of the waste liquids.

Accordingly, it is an object of the present invention to provide a machining method whereby the durability of a machining tool and finishing accuracy of a machined surface on a work are superior and no environmental problem is caused.

According to this invention there is provided a method of machining a workpiece with a machinery tool comprising the steps of: ejecting a first liquid in a mist form toward the workpiece which is being machined from a first ejection part, and ejecting a second different liquid in a mist form toward the workpiece from a second ejection part, the two ejection parts being installed in part of a machining apparatus.

In a preferred method of the present invention, different mist liquids are ejected from two ejection parts mounted on the machining apparatus towards the part of a workpiece that is being machined. For this reason, one mist liquid, which is superior in cooling effect, is ejected from one of the ejection parts, while the other mist liquid, which is superior in lubricity, is ejected form the other ejection part, whereby sufficient cooling effect and lubricity can be obtained for a machining tool and a workpiece, resulting in improvement in durability of the machining tool and finishing accuracy of the machined surface. Further, since mist liquids are ejected from the ejection parts, there is no necessity of disposal of waste liquid, resulting in no environmental problems. In the present invention, 'a face side of a machining tool' means not only a face side of a machining tool and its adjacent portion, but also swarf generated from a workpiece, or a combination of the face side, its adjacent portion and swarf. In addition, in the present invention, 'a flank side of a machining tool' means not only a flank side of a machining tool and its adjacent portion, but also a machined surface of a workpiece, or all together of the flank side, its adjacent portion and the machined surface of a workpiece.

In the present invention, if the part of the machining apparatus is a turret, the turret can effectively be utilized.

In a preferred embodiment of the present invention cooling water in a mist form is ejected from one of the ejection parts so as to be supplied to a face side of a machining tool while oil cutting fluid in a mist form is ejected from the other ejection part so as to be supplied to a flank side of the machining tool. A sufficient cooling effect on the face side can be obtained by the mist cooling water and also sufficient lubricity on the flank side can be obtained by the mist oil liquid, resulting in improvement in durability of the machining tool and finishing accuracy of the machined surface.

In order that the invention may be more readily understood and so that further features thereof may be appreciated, the invention will be described by way of example with reference to the accompanying drawings which:
Fig. 1 is a schematic perspective view illustrating an NC lathe using one embodiment of the present invention;
Fig. 2 is a front view of a turret used in the NC lathe;
Fig. 3 is a plan view of the turret;
Fig. 4 is a front view of a body, which constitutes the turret;
Fig. 5 is a rear view of the body;
Fig. 6 is a plan view of the body;
Fig. 7 is a rear view of an I-shaped body, which constitutes the turret;
Fig. 8 is a plan view of the I-shaped body
Fig. 9 is a plan view where the I-shaped body is mounted on the body
Fig. 10 is a front view where the I-shaped body is mounted on the body;
Fig. 11 is a front view of a cylindrical holder;
Fig. 12 is a rear view of the cylindrical holder;
Fig. 13 is a side view of the cylindrical holder;
Fig. 14 is an enlarged front view of the cylindrical holder;
Fig. 15 is an enlarged sectional view of the essential part of the cylindrical holder;
Fig. 16 is a front view of a supply portion;
Fig. 17 is a view illustrating the construction of the supply portion and a connecting portion;
Fig. 18 is a view illustrating a state where a workpiece is machined by an outside diameter tool;
Fig. 19 is a view illustrating a state where a workpiece is machined by an inside diameter tool;
Fig. 20 is a sectional view illustrating a principal part of a modified embodiment of an ejection nozzle; and
Fig. 21 is a perspective view illustrating a conventional example.

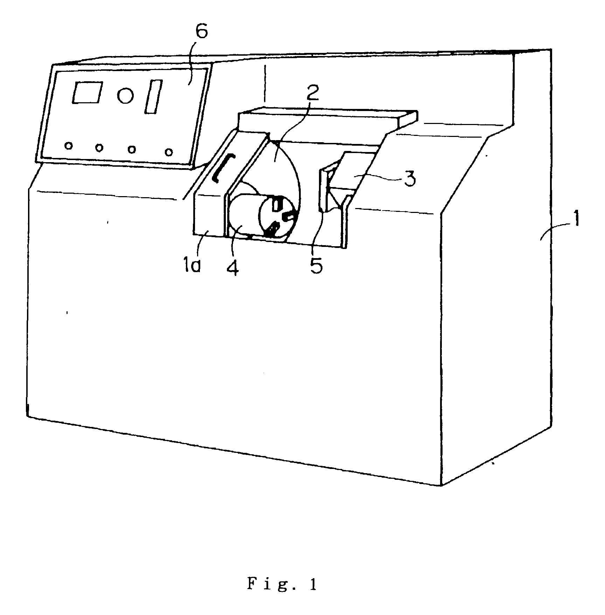

Fig. 1 illustrates an NC lathe using one embodiment of the present invention. The NC lathe is provided with a headstock 2 mounted on one side (a left side in the figure) of a machining space inside a case 1, and a tool rest 3 mounted on the other side (a right side in the figure) of the machining space so as to face the headstock 2. A chuck 4 is rotatably mounted on the headstock 2, and a turret 5 is rotatably mounted on the tool rest 3. A control panel 6 is mounted on the case 1.

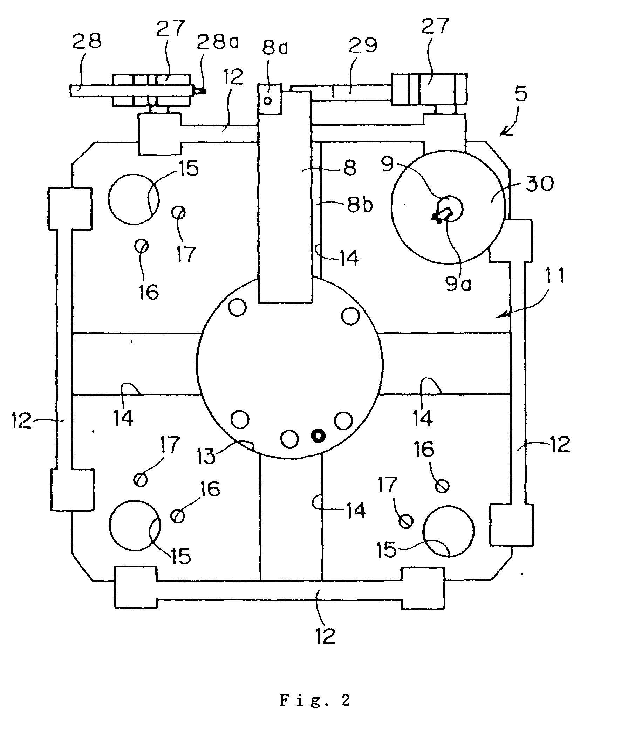

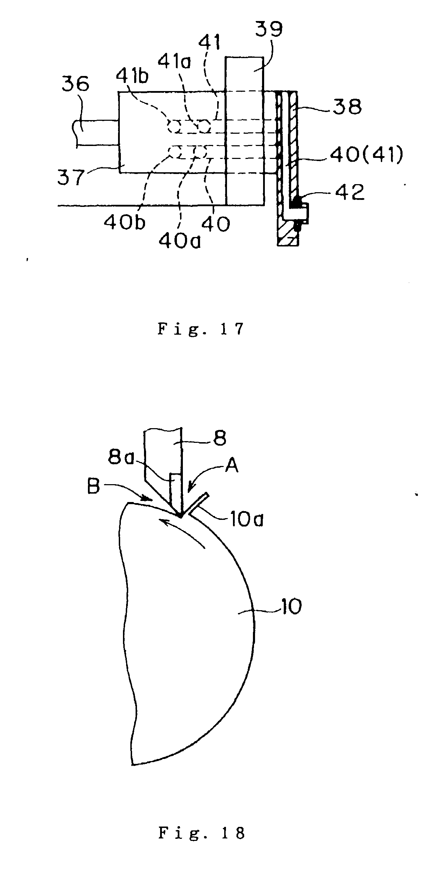

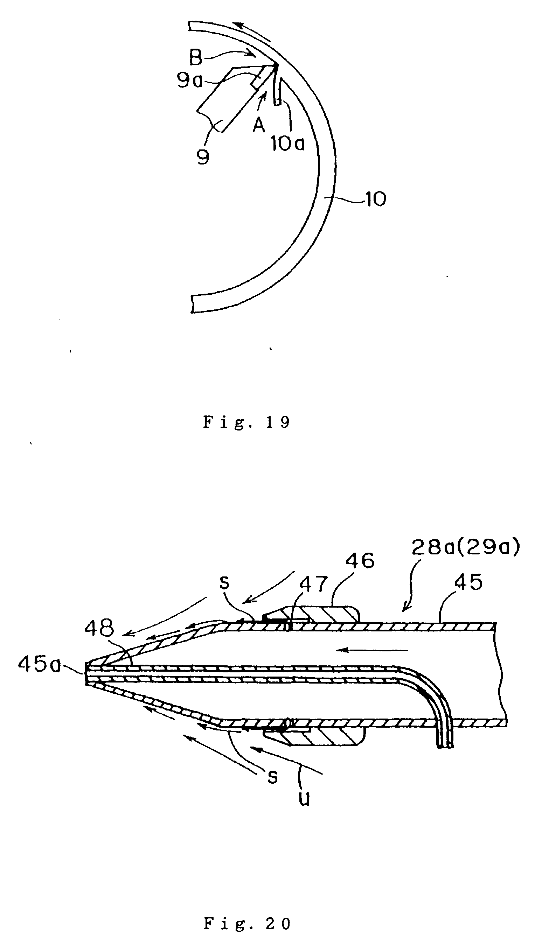

In machining, a workpiece 10 is fixed to the chuck 4 (see Figs. 18 and 19), a machining tool (an outside diameter tool 8, an inside diameter tool 9, or the like, as shown in Fig. 2) is fixed to the turret 5, and the turret 5 is rotated by a rotator (not shown) mounted on the tool rest 3 so that the machining tool is positioned at a predetermined position. A main shaft (not shown) mounted on the headstock 2 is rotated so that the workpiece 10 is rotated together therewith and is machined by the machining tool. In the NC lathe, a mist collector is mounted on the lathe as a standard equipment so as to collect the mist. In the figure, 1a is a slidable door mounted on the case 1. The door can be closed to seal the machinery space.

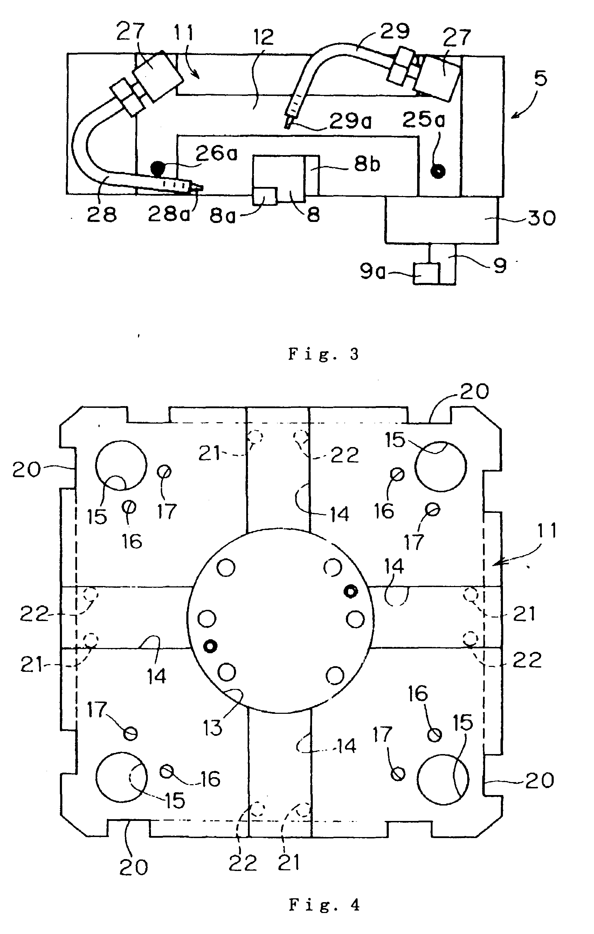

As shown in Figs. 2 and 3, the turret 5 comprises a body 11 formed in a shape of a generally rectangular parallelepiped. Four I-shaped bodies 12 are fixed to four sides (both upper and bottom, and both front and rear) of the body 11. As shown in Figs. 4 to 6, a circular cavity 13 is formed on a center of the left side (a side facing the headstock 2) and four grooves 14, each which extends vertically or horizontally in the orientation shown, are provided which extend radially outwardly from the cavity 13. The grooves are formed equidistantly (i.e., at intervals of about 90°). Each groove 14 houses an outside diameter tool 8, which is fixed by fixing means 8b (in Fig. 2 an outside diameter tool 8 is fixed on only one of grooves 14). In Fig. 2, a carbide chip 8a is mounted on the outside diameter tool 8, while 9a is a carbide chip mounted on the inside diameter tool 9.

In the body 11, a I-shaped groove 20 is formed on each of four sides (both upper and bottom, and both front and rear). Each I-shaped body 12 is engaged with a respective I-shaped groove 20, and is fastened by a screw (not shown).

A through hole 15 is made on each of four corners of the body 11 equidistantly about (i.e., at intervals of about 90°) a circle concentric with a hypothetical center of the circular cavity 13. The axis of each hole extends in parallel with the centerline of the circular cavity 13. A cylindrical holder 30 for holding an inside diameter tool 9 is inserted and fixed to each through hole 15 (in Fig. 2, the cylindrical holder 30 is inserted and fixed to only one of through holes 15.). A pair of passages 16, 17 (cooling water passage 16 and oil cutting fluid passage 17) are also made adjacent each through hole 15 equidistantly about (i.e., at intervals of about 90°) a circle concentric with the hypothetical center of the circular cavity 13. The axes of the passages 16, 17 extend in parallel with the centerline of the circular cavity 13. Cooling water is forced through the cooling water passage 16 with compressed air, while oil cutting fluid is forced through the oil cutting fluid passage 17 with compressed air.

A pair of passages 21, 22 (cooling water passage 21 and oil cutting fluid passage 22), extend from the right side of the body 11 and have an open end which communicates with each I-shaped groove 20 on the four sides (both upper and bottom, and both front and rear). Parts of the passages 21, 22 are located at a position between each pair of the passages 16, 17, respectively (which are adjacent the top and the bottom, and both the front and the rear of the body 11). The said pairs of passages 21, 22 are made, respectively, equidistantly about (i.e., at intervals of about 90°) a circle concentric with a hypothetical center of the circular cavity 13 from the right side of the body 11. The parts of the passages extend in parallel with the centerline of the circular cavity 13 to a position aligned with an I-shaped groove 20. The passages then extend at a right angle to the centerline, and finally have an open end communicating with each longitudinal part of the respective I-shaped groove 20. Cooling water is forced through the cooling water passage 21 together with compressed air, while oil cutting fluid is forced through the oil cutting fluid passage 22 together with compressed air.

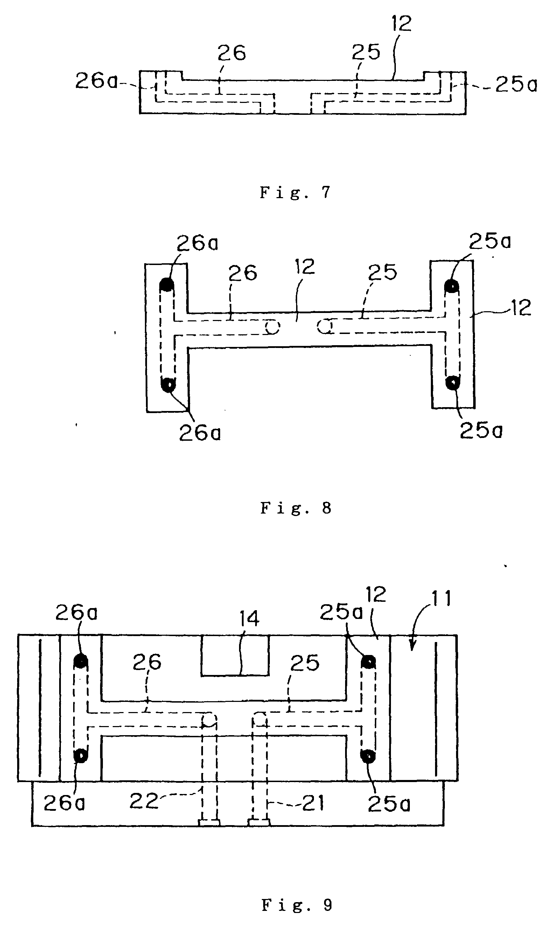

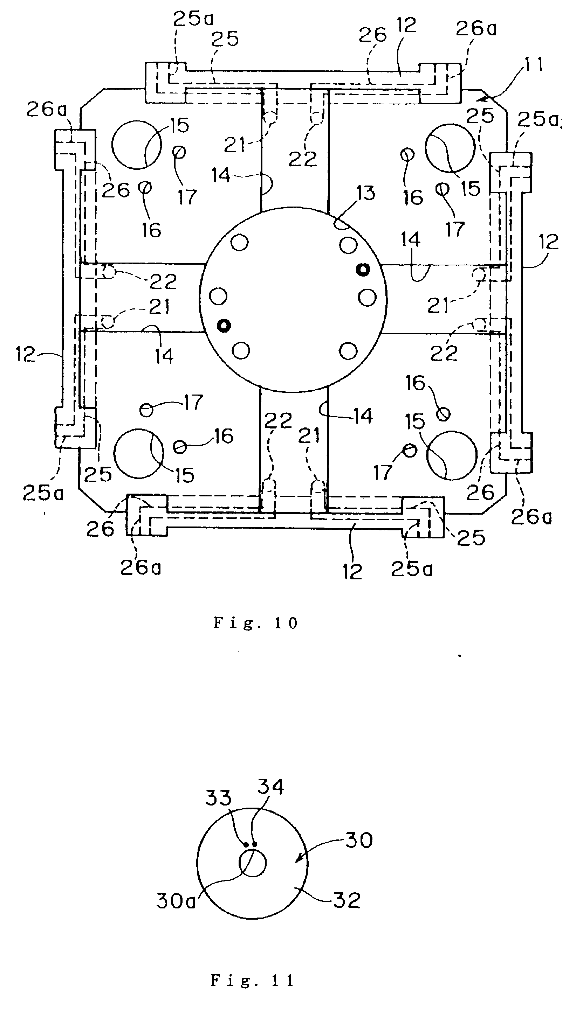

As shown in Figs. 7 and 8, a pair of passages 25, 26, which are passages for cooling water and oil cutting fluid, respectively, extend from the surface (contacting with the body 11) of the I-shaped body 12. The passages each have an open on the outside surface of the body 12 and are adapted to connect with the cooling water passage 21 and the oil cutting fluid passage 22, respectively, as shown in Figs. 9 and 10. The pair of passages 25, 26 initially extend from the outer surface of the I-shaped body 12 at positions corresponding to both open ends of the passages 21, 11 in the I-shaped grooves 20 of the four sides of the body 11 (i.e., part of the outer surface of each main longitudinal part of each I-shaped body 12). The passages 25, 26 initially extend at a right angle to the said centerline, and then extend laterally outwardly along the axis of the main longitudinal part of the I-shaped body, directly to the nearest lateral end part of the I-shaped body. The passages then each split or branch off to form two passages which extend straight in parallel with the centerline, along the lateral end part of the I-shaped body. Finally the passages extend straight at a right angle to the centerline so as to have an open end on the outside surface of the lateral end part of the I-shaped body. Cooling water and compressed air flow into the passage 25 from the cooling water passage 21, while oil cutting fluid and compressed air flow into the passage 26 from the oil cutting fluid passage 22.

Screw sockets 25a, 26a are formed in the open ends on the outside surface of the I-shaped body of the cooling water passage 25 and the oil cutting fluid passage 26, respectively. An end screw portion (not shown) which is present on an elbow 27 is fastened to selected ones of the screw sockets 25a, 26a. The remaining screw sockets 25a, 26a may be capped off. One end screw portion (not shown) of a flexible cooling water supply tube 28 is connected with the other end screw portion (not shown) of the elbow 27 which is fastened on the screw socket 25a of the cooling water passage 25, while one end screw portion (not shown) of a flexible oil cutting fluid supply tube 29 is connected with the other end screw portion (not shown) of the elbow 27 which is fastened on the screw portion 26a of the oil cutting fluid passage 26 (see Figs. 2 and 3). An ejection nozzle 28a at the end of the cooling water supply tube 28 is positioned adjacent a face side of the outside diameter tool 8 so as to eject and supply cooling water in a mist form (mist liquid) on the face side of the outside diameter tool 8. On the other hand, an ejection nozzle 29a at the end of the oil cutting fluid supply tube 29 is positioned adjacent a flank side of the outside diameter tool 8 so as to eject and supply oil cutting fluid in a mist form (mist liquid) on the flank side of the outside diameter tool 8.

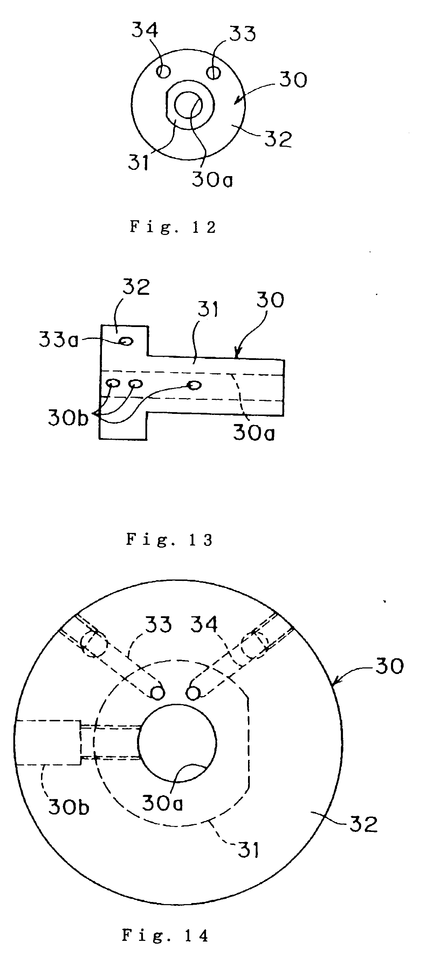

As shown in Figs. 11 to 13, the cylindrical holder 30 comprises a generally 3/4 cylindrical portion 31 (whose chord or flat portion is used to determine the position of tools held by the holder). A holder 30 is inserted into each through hole 15 of the body 11 with a large-diameter cylindrical portion 32 protruding on the left side of the body 11, wherein the inside diameter tool 9 is held and secured in a center hole 30a of both of the cylindrical portions 31, 32. A pair of passages 33, 34, extending from the right side of the large-diameter cylindrical portion 32 (contacting with the left side of the body 11) and having an open end at the left side, are made in the large cylindrical portion 32. The passage 33 connects with the cooling water passage 16, while the passage 34 connects with the oil cutting fluid passage 17. That is, the pair of passages 33, 34, which are located to communicate with the pair of passages 16, 17, extend straight leftward from the right side of the large-diameter cylindrical portion 32, in parallel with the centerline of the center hole 30a, then extend straight inwardly in a radial direction of the cylindrical holder (i.e., at a right angle to each of the centerline) and subsequently extend straight leftward in parallel with the centerline and then have an open end at a left side of the large cylindrical portion 32 (see Figs. 13 to 15).

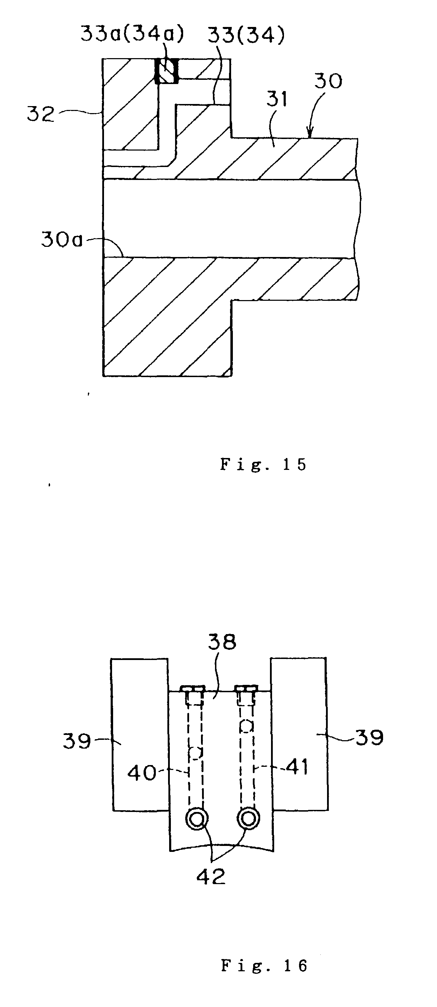

The cooling water and compressed air flow from the cooling water passage 16 into the passage 33, while the oil cutting fluid and compressed air flow from the oil cutting fluid passage 17 into the passage 34. Each open end of the cooling water passages 33 is positioned toward a face side of the inside diameter tool 9, so that cooling water in a mist form (mist liquid) is ejected and supplied to the face side of the inside diameter tool 9. On the other hand, each open end of the oil cutting fluid passages 34 is positioned toward a flank side of the inside diameter tool 9, so that oil cutting fluid in a mist form (mist liquid) is ejected and supplied to the flank side of the inside diameter tool 9. In Fig. 13, 30b is a hole where a bolt for fastening the inside diameter tool 9 is inserted. In Fig. 15, 33a and 34a are plugs.

Cooling water and compressed air are supplied to the cooling water passages 16, 21, 25, 33 and to the cooling water supply tube 28 by an apparatus shown in Figs. 17 and 18, while oil cutting fluid and compressed air are supplied to the oil cutting fluid passages 17, 22, 26, 34 and to the oil cutting fluid supply tube 29 by the same apparatus. The apparatus comprises a cylinder (not shown), a connecting portion 37 incorporated with a piston rod 36 of the cylinder, a supply portion 38 installed on the end free of the connecting portion 37 and a guide 39 for guiding the connecting portion 37, wherein a pair of passages 40, 41 (cooling water passage 40 and oil cutting fluid passage 41) in the connecting portion 37 are made so as to be connected with the passages 40, 41 in the supply portion 38, respectively. In addition, two openings 40a, 40b are made in the cooling water passage 40 of the connecting portion 37. One opening 40a is connected with a hose (not shown) for supplying cooling water from a supply apparatus including a cooling water (such as tap water) tank and a pump (both not shown), while the other opening 40b is connected with a hose (not shown) for supplying compressed air from a compressor (not shown). On the other hand, two openings 41a, 41b are made in the oil cutting fluid passage 41 of the connecting portion 37. One opening 41a is connected with a hose (not shown) for supplying oil cutting fluid from a supply apparatus including an oil cutting fluid (such as Bluebe #LB-1, available from the U.S. ITW Corp.) tank and a pump (both not shown), while the other open 41b is connected with a hose (not shown) for supplying compressed air from the compressor.

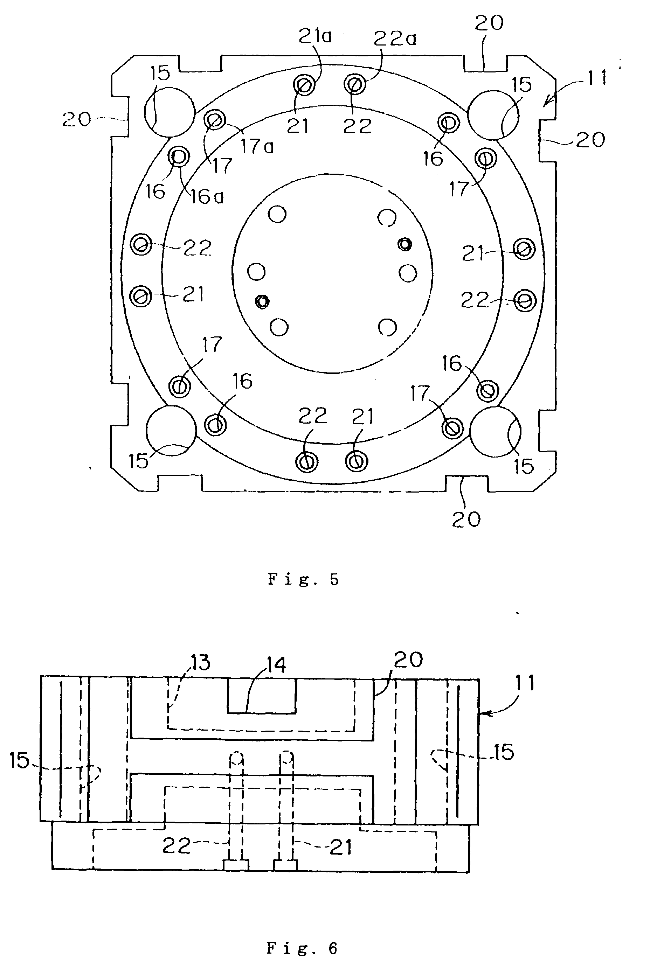

In the apparatus, when rotating the turret 5 to a selected position, the supply portion 38 is spaced from the right side of the body 11 of the turret 5 by operating the cylinder and retracting the piston rod 36. After the turret 5 has been positioned, the piston rod 36 is extended so that a front surface of the supply portion 38 is engaged with aright side of the body 11. Thereby, the cooling water passage 40 and the oil cutting fluid passage 41 of the supply portion 38 are connected with the cooling water passage 16 (21) and the oil cutting fluid passage 17 (22), respectively, of the body 11. At that time, a circular rubber seal 42, mounted on each outlet of both passages 40, 41 of the supply portion 38 is engaged in fluid tight state with each circular concave portion 16a, 17a, 21a, 22a (see Fig. 5) formed at the open end of each passage 16, 17, 21, 22.

In the above construction, when machining with the outside diameter tool 8, the cooling water passage 40 and the oil cutting fluid passage 41 of the supply portion 38 are connected with the cooling water passage 21 and the oil cutting fluid passage 22 of the body 11, respectively. On the other hand, when machining with the inside diameter tool 9, the cooling water passage 40 and the oil cutting fluid passage 41 of the supply portion 38 are connected with the cooling water passage 16 and the oil cutting fluid passage 17 of the body 11, respectively. In machining a workpiece, the pump and the compressor of the cooling water supply apparatus and the oil cutting fluid supply apparatus are driven. Thereby, mist cooling water can be supplied to the face side (shown by an arrow 'A' in Figs. 18 and 19) of the outside diameter tool 8 or the inside diameter tool 9, while a little amount of mist oil cutting fluid can be supplied to the flank side (shown by an arrow 'B' in Figs. 18 and 19) of the outside diameter tool 8 or the inside diameter tool 9. The mist cooling water impinges on the face side so that water particles of the mist cooling water cool the heat generated during machining, while the mist oil cutting fluid impinges on the flank side so that the oil particles of the oil cutting fluid properly moisten the outside diameter tool 8, the inside diameter tool 9 and the work 10, resulting in improvement in lubricity. In Figs. 18 and 19, 10a is swarf generated from the workpiece 10.

Thus, since the mist cooling water is supplied to the face side of the outside diameter tool 8 or the inside diameter tool 9, while the mist oil cutting fluid is supplied to the flank side thereof in the above embodiment, both cooling effect and lubricity can be imparted to the outside diameter tool 8, the inside diameter tool 9 and the workpiece 10, resulting in a considerable improvement in processability. Since a mist collector is mounted as a standard equipment, it makes it possible to dry the swarf.

Fig. 20 illustrates a modification of the ejection nozzles 28a, 29a. In this embodiment, a guide ring 46 engages the exterior of an air supply tube that forms the nozzle body 45 of the ejection nozzles 28a, 29a, respectively. The end portion of the nozzle body is of tapering form. Air from the air supply tube flows through the gaps 47 (as shown by an arrow 'S') which are located to communicate with a forwardly open gap between the guide ring and the nozzle body. The air is directed, along the tapering exterior of the nozzle body towards the end of the nozzle. The airflow entrains with it adjacent air (as shown by an arrow 'U'), resulting in a subsidiary flow. A liquid discharge hole 45a is made at the top end of the tapering portion of the nozzle body 45 so as to supply liquid (cooling water or oil cutting fluid) via a liquid supply tube 46 from the inside of the nozzle. The air flowing over the tapering nozzle body entrains with it the liquid supplied to the nozzle to form a fine mist.

In this embodiment, mist cooling water or mist oil cutting fluid can be ejected from the liquid discharge hole 45a.

In addition, in the above embodiments, the average particle diameter of the mist water ejected from the ejection nozzle 28a may be selected in dependence upon machining conditions by altering the pressure of the compressed air or the rate of flow of the water. However, it is preferred to set the particle diameter within a range of about 3 to 10 µm. It is preferred that the amount of the ejected mist water is usually set within a range of about 0.5 to 5cc/min. On the other hand, average particle diameter of the mist oil cutting fluid ejected from the ejection nozzle 29a may be selected in dependence upon machining conditions by altering the pressure of the compressed air or the rate of flow of the oil cutting fluid. However, it is preferred to set the particle diameter within a range of about 3 to 10 µm. It is preferred that the amount of the ejected mist oil cutting fluid is usually set within a range of about 0.1 to 0.5cc/min.

In addition, in the above embodiments, while it is preferred that tap water is used as the cooling water, pure water or super pure water may be used. Further, in the above both embodiments, while it is preferred that Bluebe #LB-1 is used as the oil cutting fluid, any conventional oil cutting fluids may be used. Still further, in the above both embodiments, two kinds of liquids, i.e., cooling water and oil cutting fluid are used, but this is not essential, and an emulsion or a chemical agent, or the like may be used. Even still further, the number of liquids is not limited to two kinds and three or more liquids may be mixed and used.

In addition, the application of the apparatus of the present invention may not be limited to machining by an NC lathe, as described above. The apparatus may be applicable to other types of machine such as machining centers and grinders.

In using the preferred workpiece machining method of the present invention, one mist liquid superior in cooling effect is ejected from one of the ejection parts, while another mist liquid superior in lubricity is ejected form the other ejection part, whereby sufficient cooling effect and lubricity can be obtained for a machining tool and a workpiece, resulting in improvement in durability of the machining tool and finishing accuracy of the machined surface. Further, since mist liquids are ejected from the ejection parts, there is no necessity for disposal of waste liquid, resulting in no environmental problems.

In the present invention, if the machining apparatus is a turret, the turret can effectively be utilized.

In the present invention, in case that mist cooling water is ejected from one of the ejection parts to a face side of a machining tool, while mist oil liquid is from the other ejection part to a flank side of a machining tool, sufficient cooling effect on the face side can be obtained by the mist cooling water and also sufficient lubricity on the flank side can be obtained by the mist oil liquid, resulting in improvement in durability of the machining tool and finishing accuracy of the machined surface.

## Claims

1. A method of machining a workpiece with a machinery tool comprising the step of:
ejecting a first liquid in a mist form toward the workpiece which is being machined from a first ejection part, and ejecting a second different liquid in a mist form toward the workpiece from a second ejection part.

2. A method as set forth in claim 1, wherein at least one ejection part of the machining apparatus is a turret.

3. A method as set forth in claim 1 or 2, wherein cooling water in a mist form is ejected from one of the ejection parts so as to be supplied to a face side of a machining tool while oil cutting fluid in a mist form is ejected from the other ejection part so as to be supplied to a flank side of the machining tool.
